# EUROPEAN PATENT SPECIFICATION

(11) **EP 3 653 039 B1**
(45) Date of publication and mention of the grant of the patent: **04.12.2024**
(21) Application number: 18831891.9
(22) Date of filing: 28.06.2018
(51) Int. Cl.: A01D 34/86, A01D 34/64, A01D 67/00, B60B 19/00, B60C 7/00

(54) **WORK MACHINE**
ARBEITSMASCHINE
ENGIN AGRICOLE

(30) Priority: 12.07.2017 JP 2017136371; 12.07.2017 JP 2017136372; 12.07.2017 JP 2017136373
(43) Date of publication of application: 20.05.2020
(73) Proprietor: Kubota Corporation, Osaka-shi, Osaka 556-8601 (JP)
(72) Inventor: NAKAMURA, Taro, Sakai-shi Osaka 590-0823 (JP); TAKIGUCHI, Junichiro, Sakai-shi Osaka 590-0823 (JP); MINAKATA, Yusuke, Amagasaki-shi Hyogo 661-0967 (JP); KOBAYASHI, Takanori, Amagasaki-shi Hyogo 661-0967 (JP)
(74) Representative: Cabinet Beau de Loménie
(86) International application number: PCT/JP2018/024690
(87) International publication number: WO 2019/013013

(56) References cited:
- WO-A1-2013/031706
- DE-A1- 4 012 427
- JP-A- 2000 236 724
- JP-A- 2002 112 613
- JP-A- 2010 158 172
- JP-A- 2015 168 396
- JP-A- 2016 145 008
- JP-A- 2017 118 838
- JP-A- H11 245 624
- JP-A- S60 113 776
- US-A1- 2016 052 567

## Description

### Technical Field

The present invention relates to a work vehicle such as a mower machine.

### Background Art

Examples of unmanned work vehicles such as mower machines include autonomous travel type and remote control type mower machines, as disclosed in Patent Document 1, and a walk-behind type mower machine with an elongated steering rod extending from a cutting blade housing that houses a cutting blade of the vehicle body thereof, as disclosed in Patent Document 2. Such mower machines are mainly used to perform mowing work on an inclined surface, such as on a highway, a riverbank, or a slope of a farm field. Additionally, Patent Documents 3 discloses a lawn mower including a cutting blade, a main body provided with front and rear wheels, and a substantially cylindrical outer peripheral surface and a weight portion corresponding to the front wheel.

Mower machines according to Patent Documents 1 and 2 each include right and left wheels on one side of the vehicle body in the front-back direction thereof, right and left wheels on the other side of the vehicle body in the front-back direction thereof, and a work apparatus, and also include a prime mover section (an engine, an electric motor, and a battery, etc.) that transmits power to the wheels and the work apparatus.

Since mower machines such as those described in Patent Documents 1 and 2 travel on grassy areas, a plurality of lugs are provided on a ground contact section of each of the wheels. The lugs are set in an orientation (orientation parallel to the axle of the wheel) orthogonal to the rotation direction of the wheel, thus allowing a driving force from the wheel to be sufficiently transmitted to the ground.

### Prior Art Documents

### Patent Documents

Patent Documents 1: JP 2015-167539A
Patent Documents 2: JP 2013-1251A
Patent Documents 3: JP 2017-118838A

### Disclosure of the Invention

### Problem to be Solved by the Invention

When a mower machine performs mowing work on an inclined surface, the mower machine may repeatedly perform work such that first the mower machine performs mowing work while travelling along a contour line of the inclined surface from one end to the other end of the inclined surface, and upon the vehicle body reaching the other end of the inclined surface, the vehicle body is moved slightly downward or upward along the inclined surface, and thereafter the mower machine performs mowing work while travelling along a contour line of the inclined surface from the other end to the one end of the inclined surface.

As described above, when a mower machine travels along a contour line of an inclined surface, the mower machine travels in an inclined state, in which the hill side (the upper side) of the inclined surface is located at a high position and the valley side (the lower side) thereof is located at a low position. Accordingly, there is the possibility of the vehicle body sliding off to the valley side (the lower side) of the inclined surface. There is also the possibility of the vehicle body falling to the valley side (the lower side) of the inclined surface.

In addition, maintenance work, such as replacement or polishing of the cutting blade, replacement of other components, cleaning of the interior of the cutting blade housing, is performed on a mower machine. When maintenance work is performed, maintenance work needs to be performed with the entire mower machine raised and the lower side of the cutting blade housing opened wide.

There are various kinds of maintenance work such as time-consuming, large scale maintenance work and simple maintenance work that can be easily performed. In this situation, for the mower machines according to Patent Documents 1 and 2, all kinds of maintenance work need to be performed while the entire mower machine is raised as described above, and therefore, there is room for improvement in workability.

### Means for Solving Problem

A work vehicle according to a non-claimed example includes:
right and left wheels on one side of a vehicle body in a front-back direction thereof, right and left wheels on another side of the vehicle body in the front-back direction thereof, a work apparatus; and a prime mover section that transmits power to the wheels and the work apparatus,
wherein a plurality of lugs are coupled to a ground contact section of each of the wheels so as to be aligned along a rotation direction of the wheels with a gap therebetween, and
each of the lugs includes
a first portion in an oblique orientation relative to the rotation direction of the wheels, and a second portion obliquely oriented relative to the rotation direction of the wheels, opposite to the oblique orientation of the first portion, and,
the first portion and the second portion are provided such that ends of the first portion and the second portion in the rotation direction of the wheels are connected to each other.

With such a configuration, when the wheels are driven to rotate, the driving force from the wheels can be sufficiently transferred to the ground via the lugs (the first portions and the second portions) because the first portion and the second portion of each of the lugs on the wheels are in oblique orientations relative to the rotation direction of the wheels, and thus the vehicle body can travel forward (or backward).

When the first portion and the second portion of each of the lugs are in oblique orientations relative to the rotation direction of the wheels, there is the possibility of the driving force from the wheels being unevenly applied obliquely forward (or obliquely backward) of the vehicle body.

With the above-described configuration, the directions of the first portion and the second portion of the lug are opposite to each other, and therefore, the direction in which the driving force from the wheels is obliquely applied from the first portion of the lug and the direction in which the driving force from the wheels is obliquely applied from the second portion of the lug are opposite to each other and cancel out each other. Accordingly, a driving force from the wheels can be effortlessly transmitted to the front side (or the back side) of the vehicle body via the first portion and the second portion of the lug.

With the above-described configuration, when the work vehicle travels along a contour line of an inclined surface, the first portion and the second portion of each of the lugs on the wheels also face the valley side (the lower side) of the inclined surface. Accordingly, even if the vehicle body begins to slide off to the valley side (the lower side) of the inclined surface, the first portion and the second portion of the lug can prevent the vehicle body from sliding off to the valley side (the lower side) of the inclined surface.

As described thus far, it is possible to obtain wheels that can prevent the vehicle body from sliding off to the valley side (the lower side) of the inclined surface, while sufficiently transmitting the driving force to the ground in the work vehicle, thus improving the traveling performance of the vehicle.

In this example, it is preferable that an intermediate portion of each of the lugs is bent,
a portion on one side extending from the bent portion of the lug is the first portion, and a portion on another side extending from the bent portion of the lug is the second portion, and
the bent portion of the lug constitutes portions of the first portion and the second portion that are connected to each other.

With such a configuration, the first portion and the second portion of each of the lugs can be obtained by bending an intermediate portion of the lug, and therefore this configuration is advantageous in terms of simplifying the structure. Since the first portion and the second portion of the lug can be treated as a single member, this configuration is also advantageous in terms of reducing the number of components.

In this example, it is preferable that the prime mover section is disposed so as to be displaced to one of right and left sides relative to a lateral center of the vehicle body,
in each of the lugs on the wheels on the prime mover section side,
portions of the first portion and the second portion that are distanced from each other are disposed on the vehicle body side relative to portions of the first portion and the second portion that are connected to each other, and
in each of the lugs on the wheels on a side opposite to the prime mover section,
portions of the first portion and the second portion that are distanced from each other are disposed on a side opposite to the vehicle body relative to portions of the first portion and the second portion that are connected to each other.

With such a configuration, the prime mover section is disposed so as to be displaced to one of right and left sides relative to a lateral center of the vehicle body, and thus the center of gravity of the vehicle body is located on the prime mover section side relative to the lateral center of the vehicle body.

Accordingly, when traveling along a contour line of an inclined surface, the work vehicle travels in a state in which the wheels on the prime mover section side are located on the hill side (the upper side) of the inclined surface, and the wheels on a side opposite to the prime mover section are located on the valley side (the lower side) of the inclined surface, whereby the work vehicle can travel in a state in which the center of gravity of the vehicle body is located on the hill side (the upper side) of the inclined surface relative to the lateral center of the vehicle body. Thus, it is possible to prevent the vehicle body from falling to the valley side (the lower side) of the inclined surface.

If the vehicle body begins to slide off to the valley side (the lower side) of the inclined surface in the above-described state, the vehicle body will attempt to/act to slide off to a side opposite to the prime mover section.

With the above-described configuration, in each of the lugs on the wheels on the prime mover section side, portions of the first portion and the second portion that are distanced from each other are disposed on the vehicle body side relative to portions of the first portion and the second portion that are connected to each other, and thus the first portion and the second portion of the lug are open to the valley side (the lower side) of the inclined surface.

Similarly, in each of the lugs on the wheels on the side opposite to the prime mover section, portions of the first portion and the second portion that are distanced from each other are disposed on a side opposite to the vehicle body relative to portions of the first portion and the second portion that are connected to each other, and thus the first portion and the second portion of the lug are open to the valley side (the lower side) of the inclined surface.

Accordingly, when the vehicle body begins to slide off to the valley side (the lower side) of the inclined surface, dirt and the like on the inclined surface enter the inside of the first portion and the second portion of the lug on the wheels on the prime mover section side and the wheels on the side opposite to the prime mover section. Thus, it is possible to prevent the vehicle body from sliding off to the valley side (the lower side) of the inclined surface.

In this example, it is preferable that the prime mover section is disposed so as to be displaced to one of right and left sides relative to a lateral center of the vehicle body,
a width of each of the wheels on a side opposite to the prime mover section is set to be larger than a width of each of the wheels on the prime mover section side, and,
in rows of the plurality of lugs along the rotation direction of the wheels, the number of the rows on each of the wheels on the side opposite to the prime mover section is set to be larger than the number of the rows on each of the wheels on the prime mover section side.

With such a configuration, the prime mover section is disposed so as to be displaced to one of right and left sides relative to the lateral center of the vehicle body, and thus the center of gravity of the vehicle body is located on the prime mover section side relative to the lateral center of the vehicle body.

Accordingly, when traveling along a contour line of an inclined surface, the work vehicle travels in a state in which the wheels on the prime mover section side are located on the hill side (the upper side) of the inclined surface, and the wheels on a side opposite to the prime mover section are located on the valley side (the lower side) of the inclined surface, whereby the work vehicle can travel in a state in which the center of gravity of the vehicle body is located on the hill side (the upper side) of the inclined surface relative to the lateral center of the vehicle body. Thus, it is possible to prevent the vehicle body from falling to the valley side (the lower side) of the inclined surface.

As described above, if the vehicle body falls to the valley side (the lower side) of an inclined surface in a state in which the work vehicle is traveling along a contour line of the inclined surface, the vehicle body pivots about outer ends of the wheels on the valley side (the lower side) of the inclined surface, and falls to the valley side (the lower side) of the inclined surface. According to the inclination of the inclined surface, ground contact pressure applied to the wheels on the valley side (the lower side) of the inclined surface is likely to be higher than that applied to the wheels on the hill side (the upper side) of the inclined surface.

With the above-described configuration, when the work vehicle travels in a state in which the wheels on the prime mover section side are located on the hill side (the upper side) of the inclined surface, the wheels on the side opposite to the prime mover section (the valley side (the lower side) of the inclined surface) have a larger width, and thus outer ends of the wheels on the side opposite to the prime mover section can be moved away from the vehicle body outwardly in the lateral direction of the vehicle body. Accordingly, it is possible to prevent the vehicle body from falling to the valley side (the lower side) of the inclined surface.

With the above-described configuration, the wheels on the side opposite to the prime mover section (the valley side (the lower side) of the inclined surface) have a larger width, and thus the number of rows of lugs on the wheels on the side opposite to the prime mover section (the valley side (the lower side) of the inclined surface) can be effortlessly set to a large number.

As described thus far, in addition to preventing the vehicle body from falling to the valley side (the lower side) of the inclined surface, the above-described configuration can enhance the function of preventing the vehicle body from sliding off to the valley side (the lower side) of the inclined surface in that the lugs on the wheels on the side opposite to the prime mover section are firmly pressed against the inclined surface because of high ground contact pressure applied to the wheels on the side opposite to the prime mover section, and that the wheels on the side opposite to the prime mover section have a larger number of rows of the lugs.

In this example, it is preferable that, in rows of the plurality of lugs along the rotation direction of the wheels, on the wheels having a plurality of the rows,
positions of the gaps are set to the same phase on the wheels so as to be aligned in a lateral direction of the vehicle body.

When a plurality of rows of lugs are provided in a state in which a plurality of lugs are coupled to the ground contact section of each of the wheels so as to be aligned along the rotation direction of the wheels with a gap therebetween, the positions of the gaps are set to the same phase on the wheels so as to be aligned in the lateral direction of the vehicle body in the above-described configuration. Accordingly, the area in the vicinity of each of the gaps will not be narrow, and thus a situation where a rock, a foreign object or the like enters, and is stuck in, the vicinity of the gap is unlikely to occur.

A work vehicle is provided according to claim 1.

When traveling along a contour line of an inclined surface, such a work vehicle in which right and left wheels and a prime mover section are disposed may travel in a state in which the wheels on the balance weight side are located on the hill side (the upper side) of the inclined surface, and the wheels on the side opposite to the balance weight are located on the valley side (the lower side) of the inclined surface.

When either the right wheels or the left wheels are provided with a balance weight in this manner, the center of gravity of the vehicle body is located on the balance weight side relative to the lateral center of the vehicle body.

Accordingly, when traveling along a contour line of an inclined surface, the work vehicle travels in a state in which the wheels on the balance weight side are located on the hill side (the upper side) of the inclined surface, whereby the work vehicle travels in a state in which the center of gravity of the vehicle body is located on the hill side (the upper side) of the inclined surface relative to the lateral center of the vehicle body. Thus, it is possible to prevent the vehicle body from falling to the valley side (the lower side) of the inclined surface.

With the above-described configuration, the wheels, which are existing members, are provided with the balance weight. This allows the wheels to also serve as the supporting members for the balance weight, thus making it possible to simplify the structure.

Since the wheels are disposed not at the lateral center of the vehicle body, but to the right and the left of the vehicle body, a state in which the center of gravity of the vehicle body is located on the balance weight side relative to the lateral center of the vehicle body can be effortlessly realized by providing the wheels with the balance weight.

### [Cancelled]

With the configuration according to claim 1, the prime mover section (an engine, an electric motor and a battery, etc.) also contributes to the function of the balance weight, and thus, a state in which the center of gravity of the vehicle body is located on the balance weight side relative to the lateral center of the vehicle body can be effortlessly realized.

In the present invention, it is preferable that the balance weight is provided toward an axle of each of the corresponding wheels relative to the ground contact section of the wheel.

With such a configuration, it is unlikely that the balance weight will obstruct the travel of the work vehicle when the work vehicle travels with the wheels (ground contact sections) in contact with the ground.

In the present invention, it is preferable that the wheels that are provided with the balance weight each include:
the axle; a first lateral side section and a second lateral side section that are coupled to the axle; and the ground contact section that is provided at an outer end of each of the first lateral side section and the second lateral side section, and
the balance weight is provided on the axle side relative to the ground contact section, and between the first lateral side section and the second lateral side section.

With the above-described configuration, the balance weight is provided inside each of the wheels each including the axle, a first lateral side section and a second lateral side section that are coupled to the axle, and the ground contact section that is provided at an outer end of each of the first lateral side section and the second lateral side section. Accordingly, it is unlikely that grass or a foreign object on the ground will be wound around! caught on the balance weight and obstruct the travel of the work vehicle.

In the present invention, it is preferable that the balance weight is coupled to the axle, and
an outer end of the balance weight is in contact with or in proximity to a surface of the ground contact section that is on the axle side.

With such a configuration, when the work vehicle travels with the wheels (ground contact sections) in contact with the ground, and the weight of the work vehicle is applied to the ground contact section of each of the wheels, it is possible to realize, in addition to a state in which the weight of the work vehicle is supported by the axle via the first lateral side section and the second lateral side section, a state in which the weight of the work vehicle is supported by the axle via the balance weight.

Accordingly, the balance weight constitutes a part of the wheel, and a wheel that supports the weight of the work vehicle can be effortlessly obtained.

In the present invention, it is preferable that the balance weight has a disc shape, and is provided coaxially with each of the corresponding wheels.

With such a configuration, when a wheel and a balance weight are configured to rotate integrally with each other, it is unlikely that uneven rotation of the wheel and the balance weight will occur, and therefore, it is unlikely that the traveling stability of the work vehicle will be impaired.

A work vehicle according to a non-claimed example includes:
a cutting blade housing including an upper side section and right and left lateral side sections;
right and left wheels that are provided on one side of the cutting blade housing in a front-back direction thereof, and right and left wheels that are provided on another side of the cutting blade housing in the front-back direction thereof, and
a cutting blade that is housed in the cutting blade housing and is driven to rotate,
wherein each of the lateral side sections is provided with an opening, and a lid section that can switch the opening between a closed state and an open state is provided.

With such a configuration, it is possible to perform maintenance work on the cutting blade and the interior of the cutting blade housing by bringing the opening of the lateral side section of the cutting blade housing into an open state.

In this case, for simple maintenance work that can be easily performed, the maintenance work may be performed by bringing the opening of the lateral side section of the cutting blade housing into an open state as described above, without the need to raise the entire work vehicle such as a mower machine.

For time-consuming, large scale maintenance work, the maintenance work may be performed by raising the entire work vehicle.

With the above-described configuration, simple maintenance work that can be easily performed can be performed without raising the entire work vehicle, and thus it is not necessary to perform maintenance work by raising the entire work vehicle for all kinds of maintenance work, thus improving the workability of maintenance work for the work vehicle.

In this example, it is preferable that a cover section that stops a flying object from the cutting blade housing is supported so as to be pivotable outside the opening and about an axis extending in a front-back direction on an upper side of the opening, and extends downward, and the cover section is disposed outside the opening.

When the cutting blade is driven to rotate inside the cutting blade housing, pebbles and the like on the ground may be flung by the cutting blade 2 and be thrown to the outside of the cutting blade housing.

With the above-described configuration, the cover section is provided outward of the lateral side section of the cutting blade housing. Accordingly, even if pebbles and the like on the ground are flung by the cutting blade, and are thrown to the outside of from the lateral side section of the cutting blade housing, flying objects such as pebbles are stopped by the cover section.

With the above-described configuration, the cover section is supported so as to be pivotable outside the opening and about an axis extending in the front-back direction on the upper side of the opening, and therefore, the vicinity of the lateral side section of the cutting blade housing can be opened by raising the cover section by pivoting the cover section to upward when maintenance work is to be performed by bringing the opening of the lateral side section of the cutting blade housing into an open state as described above.

Accordingly, maintenance work can be performed by effortlessly bringing the opening of the lateral side section of the cutting blade housing into an open state.

In this example, it is preferable that a prime mover section that transmits power to the wheels and the cutting blade is disposed so as to be displaced to one of right and left sides relative to a lateral center of the cutting blade housing, and
the opening is provided in the lateral side section on a side opposite to the prime mover section.

A work vehicle occasionally preforms mowing work on an inclined surface, such as on a highway, a riverbank, or a slope of a farm field, and mowing work on the inclined surface is often performed while the work vehicle is traveling along a contour line of the inclined surface.

In this state, the work vehicle travels in an inclined state, in which the hill side (the upper side) of the inclined surface is located at a high position and the valley side (the lower side) thereof is located at a low position, and therefore, there is the risk of the vehicle body falling to the valley side (the lower side of the inclined surface).

With the above-described configuration, a prime mover section (an engine, an electric motor and a battery, etc.) that transmits power to the wheels and the cutting blade is disposed so as to be displaced to one of right and left sides relative to the lateral center of the cutting blade housing. Accordingly, the center of gravity of the work vehicle is located on the prime mover section side relative to the lateral center of the cutting blade housing.

Accordingly, when traveling along a contour line of an inclined surface, the work vehicle travels in a state in which the wheels on the prime mover section side are located on the hill side (the upper side) of the inclined surface, and the wheels on the side opposite to the prime mover section are located on the valley side (the lower side) of the inclined surface, whereby the work vehicle travels in a state in which the center of gravity of the work vehicle is located on the hill side (the upper side) of the inclined surface relative to the lateral center of the cutting blade housing. Thus, it is possible to prevent the work vehicle from falling to the valley side (the lower side) of the inclined surface.

With the above-described configuration, in the right and left lateral side sections of the cutting blade housing, the opening is provided in the lateral side section on the side opposite to the prime mover section.

Accordingly, when maintenance work is performed by bringing the opening of the lateral side section of the cutting blade housing into an open state, the prime mover section will not obstruct the maintenance work, and thus, the maintenance work can be effortlessly performed.

### Brief Description of the Drawings

FIG. 1 is an overall right-side view of a mower machine.
FIG. 2 is an overall plan view of the mower machine.
FIG. 3 is a power transmission system diagram showing a system for transmitting power from an engine to wheels and a cutting blade.
FIG. 4 is a schematic diagram showing a linkage state between a control device and various sections.
FIG. 5 is a cross-sectional view of a right wheel.
FIG. 6 is a cross-sectional view of a left wheel.
FIG. 7 is a development view showing an arrangement state of lugs on right and left wheels.
FIG. 8 is a development view showing an arrangement state of lugs on a left wheel in a first alternative embodiment of the present invention.
FIG. 9 is development view showing an arrangement state of lugs on a left wheel in a second alternative embodiment of the present invention.
FIG. 10 is a development view showing an arrangement state of lugs on a left wheel in the second alternative embodiment of the present invention.
FIG. 11 is a development view showing an arrangement state of lugs on a right wheel in a third alternative embodiment of the present invention.
FIG. 12 is a cross-sectional view of a right wheel in a sixth alternative embodiment of the present invention.
FIG. 13 is a cross-sectional view of a right wheel in a seventh alternative embodiment of the present invention.
FIG. 14 is a plan view of a cutting blade housing.
FIG. 15 is a left side view of the cutting blade housing.
FIG. 16 is a left side view of the cutting blade housing in a state in which a cover section is raised, and a lid section has been removed.
FIG. 17 is an exploded perspective view of the cutting blade housing.

### Best Mode for Carrying out the Invention

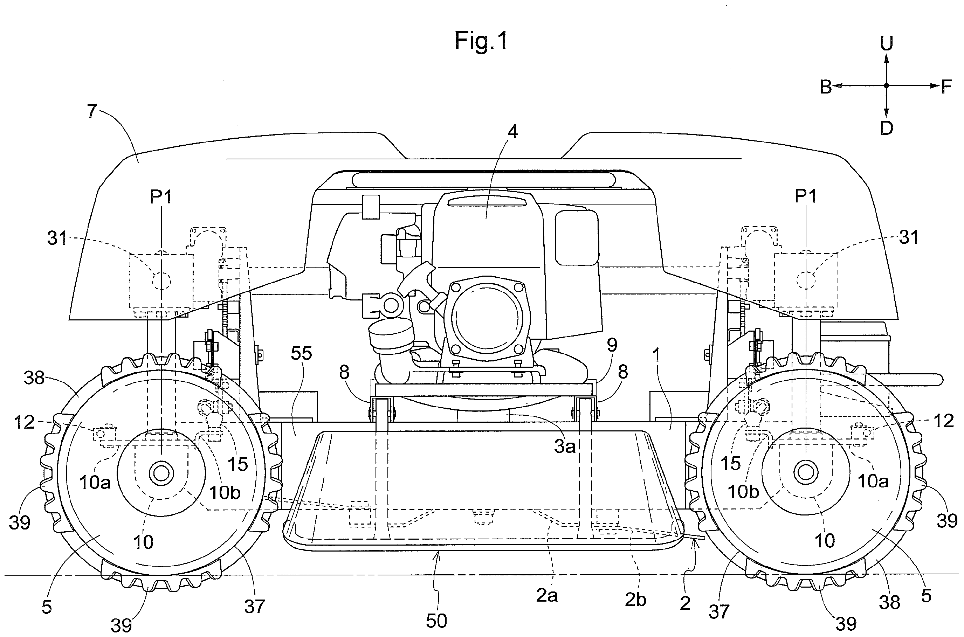

FIGS. 1 to 17 show a remote control type mower machine that is wirelessly operated, as an example of a work vehicle. In FIGS. 1 to 17, "F" indicates a forward direction of the mower machine, and "B" indicates a backward direction of the mower machine. "U" indicates an upward direction of the mower machine, and "D" indicates a downward direction of the mower machine. "R" indicates a direction to the right of the mower machine, and "L" indicates a direction to the left of the mower machine.

### Overall Configuration of Mower Machine

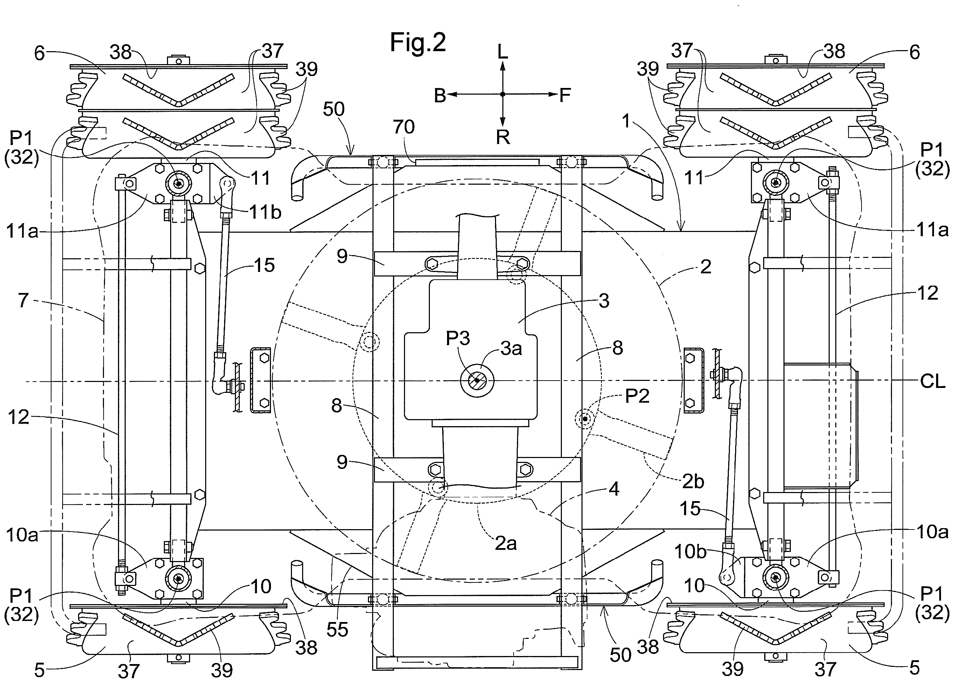

As shown in FIGS. 1 and 2, the mower machine includes a cutting blade housing 1 (corresponding to a vehicle body), a cutting blade 2 (corresponding to a work apparatus) is housed in the cutting blade housing 1, and a power transmission case 3 and an engine 4 (corresponding to a prime mover section) that are supported by the cutting blade housing 1.

A right wheel 5 and a left wheel 6 on one side of the cutting blade housing 1 in the front-back direction thereof, and a right wheel 5 and a left wheel 6 on the other side of the cutting blade housing 1 in the front-back direction thereof are provided, and the cutting blade housing 1 is supported by the wheels 5 and 6. A cover 7 that covers the upper side of the power transmission case 3, the engine 4, and so forth is provided.

### Configuration of Cutting Blade Housing

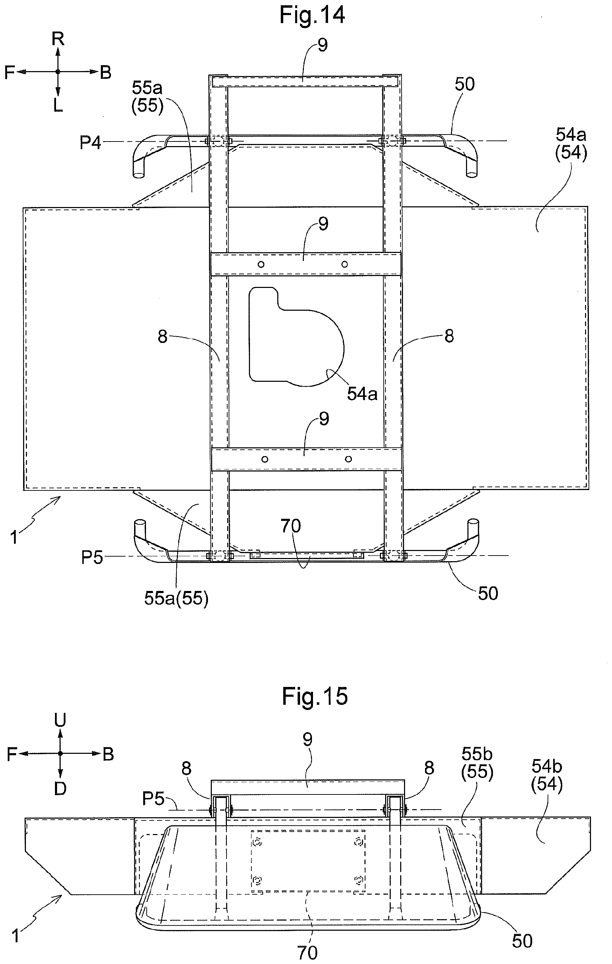

As illustratively shown in FIGS. 14 to 17, the cutting blade housing 1 includes, for example, a central section 54, and right and left lateral sections 55, and the right and left lateral sections 55 are coupled to the central section 54.

The central section 54 includes an upper side section 54a, and right and left lateral side sections 54b, and has a rectangular shape in a plan view, and a cutout-shaped opening 54c with no lower portion is formed in each of the lateral side sections 54b. As shown in FIGS. 1 and 2, a right wheel 5 and a left wheel 6 are supported at a front portion of the central section 54 (the cutting blade housing 1), and a right wheel 5 and a left wheel 6 are supported at a rear portion of the central section 54.

As shown in FIGS. 14 to 17, each of the right and left lateral sections 55 includes an upper side section 55a and a lateral side section 55b provided on only one side thereof, has a trapezoidal shape in a plan view, and is coupled to the portion of the opening 54c in the corresponding lateral side section 54b of the central section 54.

A cutout-shaped opening 55c with no lower portion is provided in the lateral side section 55b of the left lateral section 55. Bolts 56 are provided in the periphery of the opening 55c of the left lateral section 55, and a flat plate-shaped lid section 70 is coupled to the bolts 56 using nuts, and the opening 55c of the left lateral section 55 is brought into a closed state by the lid section 70.

### Configuration Relating to Cutting Blade and Engine

As shown in FIGS. 1 and 2, front and rear frames 8 are coupled to the cutting blade housing 1 along the lateral direction, and frames 9 are coupled to the front and rear frames 8 along the front-back direction so as to span therebetween.

The power transmission case 3 is coupled to the frames 9 and is supported by the cutting blade housing 1, and a cutting blade supporting section 3a extending downward from the power transmission case 3 is inserted into the cutting blade housing 1. The cutting blade 2 is rotatably supported by the cutting blade supporting section 3a of the power transmission case 3, and the cutting blade 2 is housed in the cutting blade housing 1.

As a specific example, as shown in FIGS. 1 and 2 and FIGS. 14 to 17, on the cutting blade housing 1, the frames 8 are coupled to the upper side sections 54a and 55a of the central section 54 and the lateral sections 55 along the lateral direction, and the frames 9 are coupled to the front and rear frames 8 along the front-back direction so as to span therebetween.

The power transmission case 3 is coupled to the frames 9 and is supported by the cutting blade housing 1, and the cutting blade supporting section 3a extending downward from the power transmission case 3 is inserted into the cutting blade housing 1 from an opening 54d in the upper side section 54a of the central section 54. The cutting blade 2 is supported by the cutting blade supporting section 3a of the power transmission case 3 so as to be rotatable about a vertical axis P3, and the cutting blade 2 is housed in the cutting blade housing 1.

As shown in FIGS. 1, 2 and 3, the cutting blade 2 includes a disc-shaped supporting plate 2a, and blade sections 2b that are supported at a plurality of positions on the outer circumferential portion of the supporting plate 2a so as to be freely rotatable about vertical axes P2.

When the cutting blade 2 is driven to rotate inside the cutting blade housing 1, pebbles and the like on the ground may be flung by the cutting blade 2 and be thrown to the outside of the cutting blade housing 1. Therefore, as shown in FIGS. 1 and 2, right and left cover sections 50 for stopping flying objects from the cutting blade housing 1 are provided at a right portion and a left portion of the cutting blade housing 1.

As shown in FIGS. 1 and 2, the engine 4 is coupled to the frames 8 so as to be located to the right of the cutting blade housing 1 and is supported by the cutting blade housing 1.

In a plan view, the engine 4 is disposed so as to be displaced to the right relative to the lateral center CL of the cutting blade housing 1, and the engine 4 is disposed between the right wheels 5. In a view from the front-back direction, the engine 4 is disposed at a low position such that upper portions of the right wheels 5 and a lower portion of the engine 4 overlap.

For example, as shown in FIGS. 1, 2, 16, and 17, in the cutting blade housing 1, the opening 55c is provided in the lateral side section 55b of the left lateral section 55, and the opening 55c may be provided in the lateral side section 55b of the lateral section 55 on the side opposite to the engine 4. In this case, the cover sections can be configured as follows.

### Configuration of Cover section

When the cutting blade 2 is driven to rotate inside the cutting blade housing 1, pebbles and the like on the ground may be flung by the cutting blade 2 and be thrown to the outside of the cutting blade housing 1. Therefore, as shown in FIGS. 1 and 2, the right and left cover sections 50 for stopping flying objects from the cutting blade housing 1 are provided at a right portion and a left portion of the cutting blade housing 1.

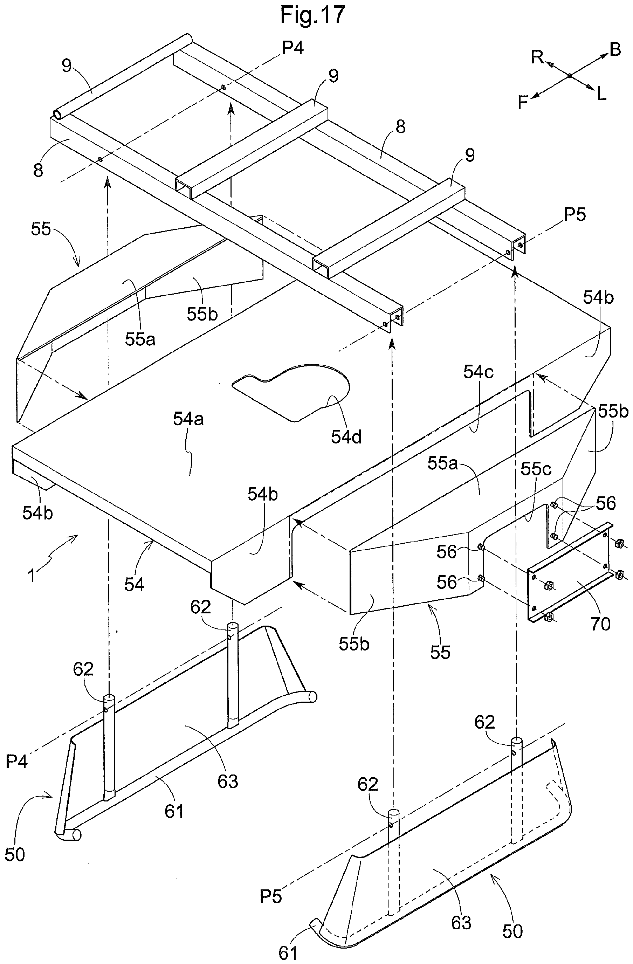

As shown in FIG. 17, each of the cover sections 50 includes a frame section 61 formed by bending a pipe member into a channel shape, two frame sections 62, which are pipe members, coupled to the frame section 61, and a flat plate-shaped cover plate 63 coupled to the frame sections 61 and 62 so as to extend thereover.

As shown in FIGS. 14 and 17, upper portions of the frame sections 62 of the right cover section 50 are supported so as to be freely pivotable about an axis P4 extending in the front-back direction through right portions of the frames 8, and the right cover section 50 extends downward from the axis P4.

The axis P4 is located outward of and above the lateral side section 55b of the right lateral section 55. As shown in FIGS. 1 and 2, the right cover section 50 is disposed outward of the lateral side section 55b of the right lateral section 55, and between the wheel 5 on the front side and the wheel 6 on the back side.

As shown in FIGS. 14 to 17, upper portions of the frame sections 62 of the left cover section 50 are supported so as to be freely pivotable about an axis P5 extending in the front-back direction at left ends of the frames 8, and the left cover section 50 extends downward from the axis P5.

The axis P5 is located outward of and above the lateral side section 55b (the opening 55c) of the left lateral section 55. As shown in FIGS. 1 and 2, the left cover section 50 is disposed outward of the lateral side section 55b (the opening 55c) of the left lateral section 55, and between the wheel 5 on the front side and the wheel 6 on the backside.

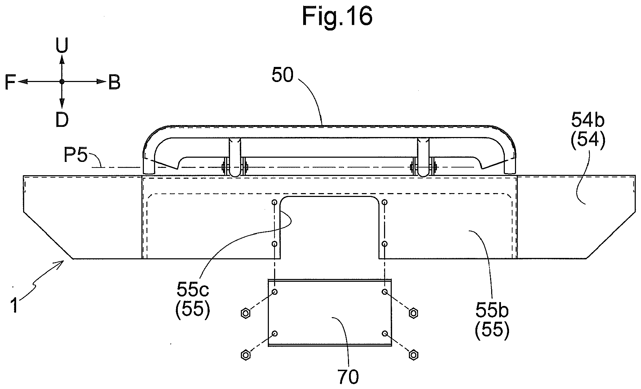

As shown in FIGS. 15 and 16, a portion in the vicinity of the lateral side section 55b (the opening 55c) of the left lateral section 55 can be opened by raising the left cover section 50 by pivoting the left cover section 50 to upward about the axis P5. Thus, the opening 55c of the left lateral section 55 can be brought into an open state by removing the lid section 70.

### Structure for Transmitting Power to Cutting Blade

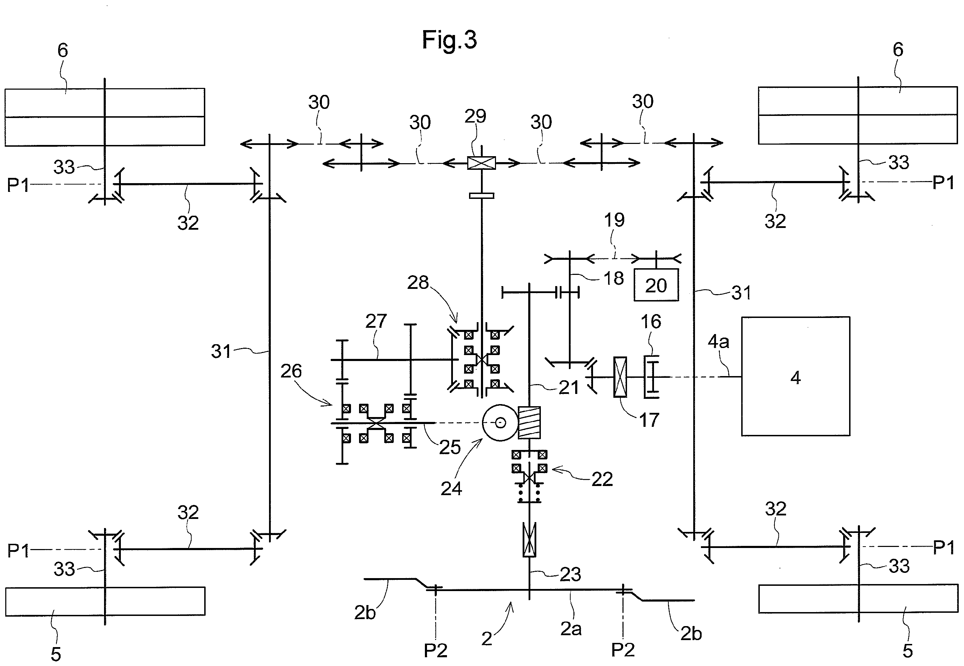

As shown in FIG. 3, power from an output shaft 4a of the engine 4 is transmitted to a power transmission shaft 18 via a centrifugal clutch 16 and a brake 17 provided inside the power transmission case 3 (see FIG. 2; the same applies to the following), and power is transmitted from the power transmission shaft 18 to a power generator 20 via a power transmission belt 19.

Inside the power transmission case 3, power from the power transmission shaft 18 is transmitted to a power transmission shaft 21, and power from the power transmission shaft 21 is transmitted, via a cutting blade clutch 22, to a cutting blade drive shaft 23 supported inside the cutting blade supporting section 3a of the power transmission case 3.

The cutting blade 2 (the supporting plate 2a) is coupled to a lower portion of the cutting blade drive shaft 23, and thus the cutting blade 2 is driven to rotate. The cutting blade clutch 22 can be operated between a power transmission state and a blocked state, using a cutting blade clutch lever (not shown) supported by the cutting blade housing 1.

### Power Transmission Structure and Support Structure for Wheels

As shown in FIG. 3, inside the power transmission case 3 (see FIG. 2; the same applies to the following), the power transmission shaft 21 is provided with a worm mechanism 24. Power from the power transmission shaft 21 is transmitted from the worm mechanism 24 to a forward/backward travel switching device 28, via a power transmission shaft 25, a transmission device 26, and a power transmission shaft 27. Outside the power transmission case 3, power from the forward/backward travel switching device 28 is transmitted to power transmission shafts 31 via a torque limiter 29 and power transmission chains 30.

The transmission device 26 can be shifted between a low-speed state and a high-speed state by operating a shift member to slide, and can be operated between the low-speed state and the high-speed state, using a transmission lever (not shown) supported by the cutting blade housing 1 (see FIG. 2; the same applies to the following). The forward/backward travel switching device 28 can be operated between a forward travel state and a backward travel state, or into a neutral state, by operating the shift member to slide.

As shown in FIGS. 1, 2 and 3, power transmissions shafts 32 are supported at a right portion and a left portion of a front portion of the cutting blade housing 1, in a vertical direction, and power transmission shafts 32 are supported at a right portion and a left portion of a rear portion of the cutting blade housing 1, along a vertical axis P1. Thus, power from the power transmission shafts 31 is transmitted to the power transmission shafts 32.

As shown in FIGS. 1 and 2, right wheel supporting cases 10 are supported by right portions of a front portion and a rear portion of the cutting blade housing 1 (the central section 54) so as to be steerable about the power transmission shafts 32 (axes P1) supported vertically. Left wheel supporting cases 11 are supported at left portions of a front portion and a rear portion of the cutting blade housing 1 (the central section 54) so as to be steerable about the power transmission shafts 32 (axes P1) supported vertically.

As shown in FIGS. 1, 2 and 3, axles 33 are supported by the right and left wheel supporting cases 10 and 11, the wheels 5 and 6 are coupled to the axles 33, and power from the power transmission shafts 32 is transmitted to the axles 33, whereby the wheels 5 and 6 are driven to rotate.

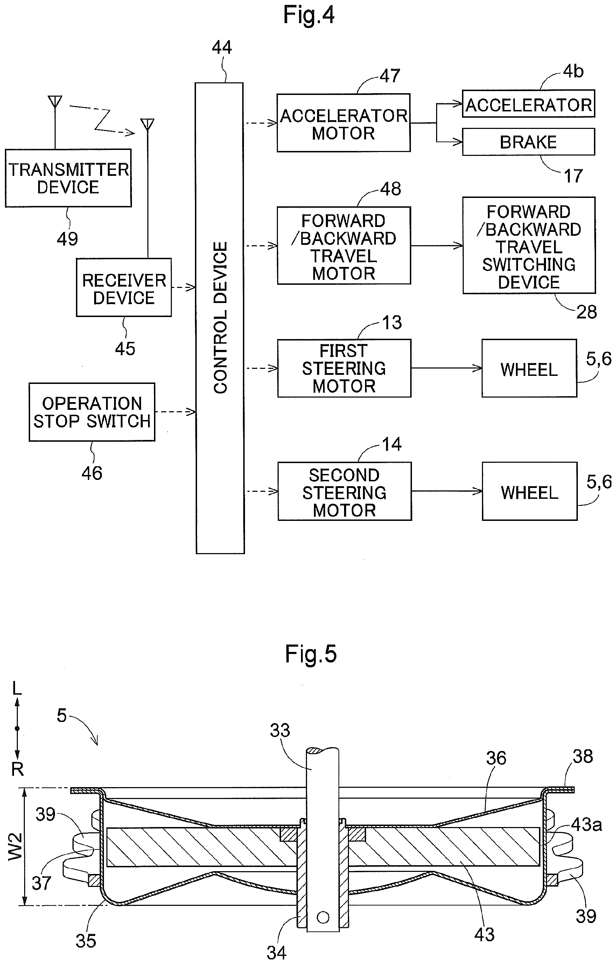

As shown in FIGS. 1 and 2, a tie rod 12 is connected to arms 10a and 11a of the right and left wheel supporting cases 10 and 11 so as to span between the arms 10a and 11a. A rod 15 is connected to a first steering motor 13 (see FIG. 4) attached to the cutting blade housing 1 and an arm 10b of a right wheel supporting case 10 so as to span between the cutting blade housing 1 and the arm 10b, and the right and left wheels 5 and 6 on one side of the cutting blade housing 1 in the front-back direction thereof are steered by the first steering motor 13.

A rod 15 is connected to a second steering motor 14 (see FIG. 4) attached to the cutting blade housing 1 and an arm 11b of the left wheel supporting case 11 so as to span between the cutting blade housing 1 and the arm 11b, and the right and left wheels 5 and 6 on the other side of the cutting blade housing 1 in the front-back direction thereof are steered by the second steering motor 14.

In the following, exemplary structures of the wheels will be described.

### Structure of Right Wheel

As shown in FIG. 5, each right wheel 5 includes a cylindrical axle 34, a first lateral side section 35 formed by pressing a plate member into a dish-like shape, and a second lateral side section 36 formed by pressing a plate member into a dish-like shape, and the first lateral side section 35 and the second lateral side section 36 are coupled to the axle 34.

As shown in FIGS. 1, 2 and 5, an outer circumferential portion of the first lateral side section 35 extends so as to form a ground contact section 37, and an end of the ground contact section 37 is coupled to an outer circumferential portion of the second lateral side section 36 to form a flat plate-shaped rib 38 that protrudes outward in the radial direction. An axle 33 is inserted into the axle 34, and the axles 33 and 34 are coupled using bolts.

As shown in FIGS. 1, 2, 5, and 7, a plurality of lugs 39 are coupled to the ground contact section 37 so as to be aligned along a rotation direction A1 of the right wheel 5 with a gap W1 therebetween.

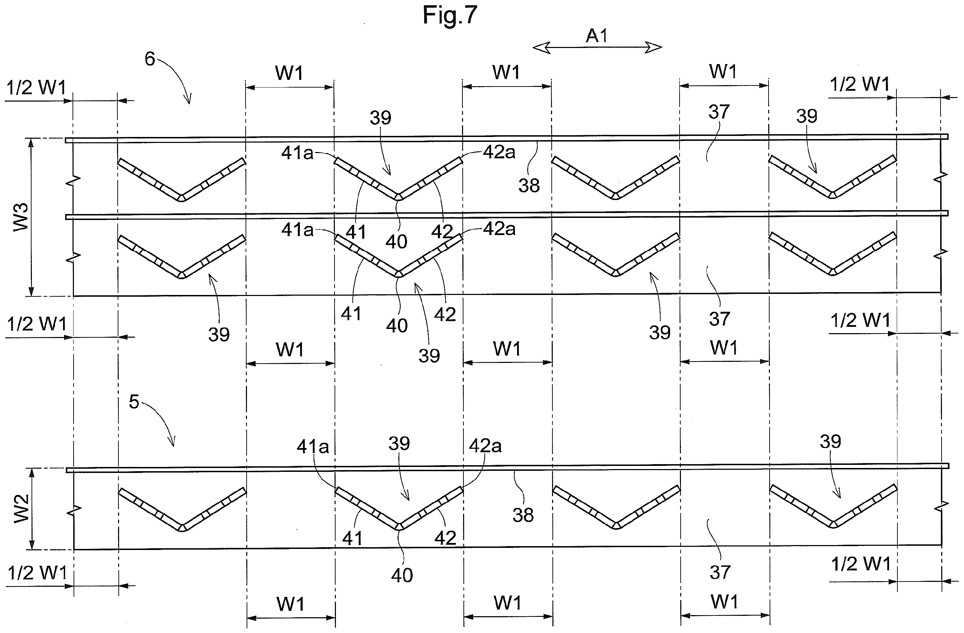

As shown in FIG. 7, each of the lugs 39 is formed so as to be bent at an intermediate portion 40 thereof, and includes a first portion 41, which is a portion extending from the intermediate portion 40 (bent portion) on one side of the lug 39, and a second portion 42, which is a portion extending from the intermediate portion 40 (bent portion) on the other side of the lug 39.

As shown in FIG. 7, the first portion 41 of the lug 39 is in an oblique orientation relative to the rotation direction A1 of the right wheel 5. The second portion 42 of the lug 39 is obliquely oriented relative to the rotation direction A1 of the right wheel 5, opposite to the oblique orientation of the first portion 41 of the lug 39. Outer circumferential portions of the first portion 41 and the second portion 42 of the lug 39 are each formed into a shape having protrusions and recesses.

Due to the above-described structure, the first portion 41 and the second portion 42 of each of the lugs 39 are provided such that ends (constituting the intermediate portion 40 of the lug 39) of the first portion 41 and the second portion 42 of the lug 39 in the rotation direction A1 of the right wheel 5 are connected to each other. The bent portion (the intermediate portion 40) of each of the lugs 39 constitutes the portions of the first portion 41 and the second portion 42 of the lug 39 that are connected to each other.

As shown in FIGS. 2 and 7, on each right wheel 5, the rib 38 is disposed at an end of the ground contact section 37 on the cutting blade housing 1 side (the vehicle body side).

In each lug 39 of the right wheel 5, portions 41a and 42a of the first portion 41 and the second portion 42 of the lug 39 that are distanced from each other are disposed on the cutting blade housing 1 side (the vehicle body side) (the rib 38 side), relative to the intermediate portion 40 (constituting the portions of the first portion 41 and the second portion 42 that are connected to each other) of the lug 39.

### Structure of Left Wheel

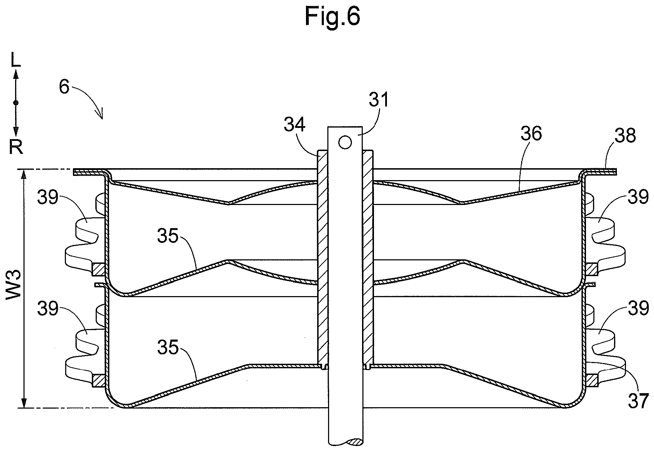

As shown in FIG. 6, each left wheel 6 includes a cylindrical axle 34, first right and left lateral side sections 35 formed by pressing plate members into a dish-like shape, and a second lateral side section 36 formed by pressing a plate member into a dish-like shape, and the first right and left lateral side sections 35 and the second lateral side section 36 are coupled to the axle 34.

As shown in FIGS. 2 and 6, an outer circumferential portion of the left first lateral side section 35 extends so as to form a left ground contact section 37, and an end of the left ground contact section 37 is coupled to an outer circumferential portion of the second lateral side section 36 to form a flat plate-shaped rib 38 that protrudes outward in the radial direction. An outer circumferential portion of the right first lateral side section 35 extends so as to form a right ground contact section 37, and an end of the right ground contact section 37 is coupled to an end of the left ground contact section 37. An axle 33 is inserted into the axle 34, and the axles 33 and 34 are coupled using bolts.

As shown in FIGS. 2, 6, and 7, as in the case of the right wheel 5, a plurality of lugs 39 are coupled to the right and left ground contact sections 37 so as to be aligned along a rotation direction A1 of the left wheel 6 with a gap W1 therebetween.

Each of the lugs 39 is formed so as to be bent at an intermediate portion 40 thereof, and includes a first portion 41, which is a portion extending from the intermediate portion 40 (bent portion) on one side of the lug 39, and a second portion 42, which is a portion extending from the intermediate portion 40 (bent portion) on the other side of the lug 39.

As shown in FIG. 7, the first portion 41 of the lug 39 is in an oblique orientation relative to the rotation direction A1 of the left wheel 6. The second portion 42 of the lug 39 is obliquely oriented relative to the rotation direction A1 of the left wheel 6, opposite to the oblique orientation of the first portion 41 of the lug 39. Outer circumferential portions of the first portion 41 and the second portion 42 of the lug 39 are each formed into a shape having protrusions and recesses.

With the above-described structure, the first portion 41 and the second portion 42 of each of the lugs 39 are provided such that ends (constituting the intermediate portion 40 of the lug 39) of the first portion 41 and the second portion 42 of the lug 39 in the rotation direction A1 of the left wheel 6 are connected to each other. The bent portion (the intermediate portion 40) of the lug 39 constitutes the portions of the first portion 41 and the second portion 42 of the lug 39 that are connected to each other.

As shown in FIGS. 2 and 7, on each left wheel 6, the rib 38 is disposed at an end of the left ground contact section 37 on the side opposite to the cutting blade housing 1 side (the vehicle body side).

In each lug 39 of the left wheel 6, portions 41a and 42a of the first portion 41 and the second portion 42 of the lug 39 that are distanced from each other are disposed on the side opposite to the cutting blade housing 1 side (the vehicle body side) (the rib 38 side), relative to the intermediate portion 40 (constituting the portions of the first portion 41 and the second portion 42 that are connected to each other) of the lug 39.

### Comparison between Right Wheel and Left Wheel

As shown in FIGS. 5, 6 and 7, a width W2 of each right wheel 5, which are on the engine 4 side, is about twice as large as a width W3 of each left wheel 6, which are on the side opposite to the engine 4.

As for the number of rows of the plurality of lugs 39 along the rotation direction A1 of the wheels 5 and 6, on the right wheel 5, which is on the engine 4 side, the number of the rows is one. In contrast, on the left wheel 6, which is on the side opposite to the engine 4, the number of rows is two, which is more than one.

As described above, in the left wheel 6, the number of rows of the plurality of lugs 39 along the rotation direction A1 of the wheels 5 and 6 is two. In this case, the positions of the gaps W1 are set to the same phase on the left wheel 6 so as to be aligned in the lateral direction of the cutting blade housing 1.

For the right and left wheels 5 and 6 as well, the positions of the gaps W1 are set to the same phase on the right and left wheels 5 and 6 so as to be aligned in the lateral direction of the cutting blade housing 1.

As shown in FIGS. 5 and 6, the right wheel 5 is provided with a balance weight 43. In contrast, the left wheel 6 is not provided with a balance weight 43.

As shown in FIG. 5, a disc-shaped balance weight 43 is provided, and the balance weight 43 is disposed inside the right wheel 5, is coupled to the axle 34, and is provided coaxially with the right wheel 5.

As shown in FIGS. 2 and 5, the balance weight 43 is provided in each of the right wheels 5, and the engine 4 is disposed so as to be displaced to the right relative to the lateral center CL of the cutting blade housing 1, whereby the engine 4 is disposed so as to be displaced on the balance weight 43 side relative to the lateral center CL of the cutting blade housing 1.

As shown in FIG. 5, in the right wheel 5, the balance weight 43 is provided between the first lateral side section 35 and the second lateral side section 36. An outer end 43a of the balance weight 43 is in proximity to (or in contact with) the inner surface (the surface on the axles 33 and 34 side) of the ground contact section 37, and the outer end 43a of the balance weight 43 is disposed on the axles 33 and 34 side relative to the ground contact section 37.

### Wireless Operation of Mower Machine

This mower machine is a remote control type mower machine that is wirelessly operated.

As shown in FIG. 4, the cutting blade housing 1 includes a control device 44, a receiver device 45, an operation stop switch 46 that is operated by an operator, an accelerator motor 47 that operates an accelerator 4b of the engine 4 and the brake 17, and a forward/backward travel motor 48 that operates the forward/backward travel switching device 28.

The accelerator 4b of the engine 4 is biased to a low-speed side (an idling side) by a spring (not shown), and the brake 17 is biased to a braking side by a spring (not shown).

When the engine 4 is in an idling state, the centrifugal clutch 16 (see FIG. 3; the same applies to the following) is in a blocked state, and the brake 17 is in a braking state. The accelerator motor 47 operates the brake 17 into a released state and operates the accelerator 4b of the engine 4 to a high-speed side, and thus the centrifugal clutch 16 is brought into the power transmission state.

The control device 44 operates the first steering motor 13, the second steering motor 14, the accelerator motor 47, and the forward/backward travel motor 48, and operation signals from the receiver device 45 and the operation stop switch 46 are input to the control device 44.

The receiver device 45 receives operation signals from a transmitter device 49 that is operated by an operator, and the control device 44 operates the first steering motor 13, the second steering motor 14, the accelerator motor 47, and the forward/backward travel motor 48 based on the operation signals from the transmitter device 49 (or the receiver device 45).

When the right and left wheels 5 and 6 on one side of the cutting blade housing 1 in the front-back direction thereof are steered by the first steering motor 13, and the right and left wheels 5 and 6 on the other side of the cutting blade housing 1 in the front-back direction thereof are steered by the second steering motor 14, it is possible to select, using the transmitter device 49, a first steering mode, a second steering mode, an in-phase mode, or an anti-phase mode, which are described in (1) to (4) below.
(1) A first steering mode in which the right and left wheels 5 and 6 on the one side are steered by the first steering motor 13, with the right and left wheels 5 and 6 on the other side being fixed at straight travel positions.
(2) A second steering mode in which the right and left wheels 5 and 6 on the other side are steered by the second steering motor 14, with the right and left wheels 5 and 6 on the one side being fixed at straight travel positions.
(3) An in-phase mode in which the right and left wheels 5 and 6 on the one side and the other side are steered in the same direction by the first steering motor 13 and the second steering motor 14, thus moving the mower machine in parallel.
(4) An anti-phase mode in which the right and left wheels 5 and 6 on the one side and the other side are steered in directions opposite to each other by the first steering motor 13 and the second steering motor 14, thus causing the mower machine to make a small turn.

When a mower machine performs mowing work on an inclined surface, the mower machine may repeatedly perform work such that first the mower machine performs mowing work while travelling along a contour line of the inclined surface from one end to the other end of the inclined surface, and upon the mower machine reaching the other end of the inclined surface, the mower machine is moved slightly downward or upward along the inclined surface, and thereafter the mower machine performs mowing work while travelling along a contour line of the inclined surface from the other end to the one end of the inclined surface.

During the above-described mowing work, the mower machine according to the present invention may travel along a contour line in a state in which the right wheels 5 on the engine 4 side are located on the hill side (the upper side) of the inclined surface, and the left wheels 6 on the side opposite to the engine 4 are located on the valley side (the lower side) of the inclined surface.

When the mower machine reaches one (or the other) end of the inclined surface, the mower machine may be steered in one of the first steering mode, the second steering mode, the in-phase mode, and the anti-phase mode, which are described in (1) to (4) above, and the mower machine may be operated to travel forward or backward, thus moving the mower machine slightly downward or upward along the inclined surface.

### First Alternative Embodiment of the Present Invention

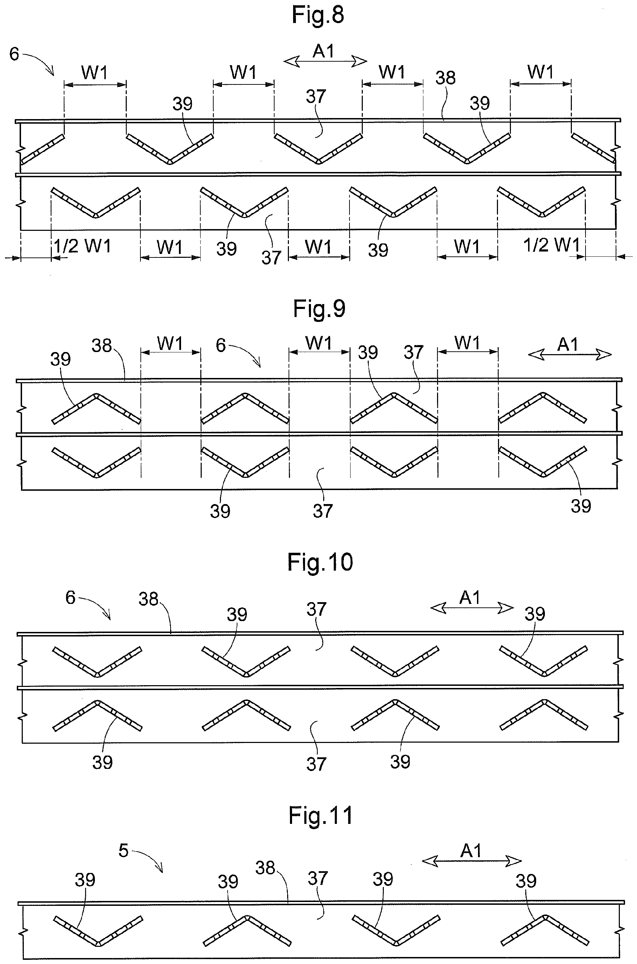

As shown in FIG. 8, in two rows of the plurality of lugs 39 of each of the left wheels 6 along the rotation direction A1 of the wheels 5 and 6, the gaps W1 in the two rows may be displaced such that positions of the gaps W1 and the lugs 39 are aligned in the lateral direction of the cutting blade housing 1.

### Second Alternative Embodiment of the Present Invention

As shown in FIGS. 9 and 10, in two rows of the plurality of lugs 39 of each of the left wheels 6 along the rotation direction A1 of the wheels 5 and 6, the directions of the lugs 39 of the right ground contact section 37 and the lugs 39 of the left ground contact section 37 may be opposite to each other.

In the structures shown in FIGS. 9 and 10, the gaps W1 in the above-described two rows may be displaced such that positions of the gaps W1 and the lugs 39 are aligned in the lateral direction of the cutting blade housing 1, as shown in FIG. 8.

### Third Alternative Embodiment of the Present Invention

As shown in FIG. 11, in one row of the plurality of lugs 39 of each of the right wheels 5 along the rotation direction A1 of the wheels 5 and 6, the directions of the lugs 39 may be alternately opposite to each other.

The configuration shown in FIG. 11 may be applied to the left wheels 6 described in "Best Mode for Carrying out the Invention", "First Alternative Embodiment of the Present Invention" and "Second Alternative Embodiment of the Present Invention" above.

### Fourth Alternative Embodiment of the Present Invention

In rows of the plurality of lugs 39 of the right and left wheels 5 and 6 along the rotation direction A1 of the wheels 5 and 6, the number of the rows of the plurality of lugs 39 of each of the right wheels 5 may be two, and the number of the rows of the plurality of lugs 39 of each of the left wheels 6 may be three.

The width W2 of the right wheels 5 and the width W3 of the left wheels 6 may be the same, and the number of right wheels 5 and the number of the left wheels 6 may be the same.

In rows of the plurality of lugs 39 of the right and left wheels 5 and 6 along the rotation direction A1 of the wheels 5 and 6, the number of lugs 39 does not need to be four, and may be three, five, or six, for example.

In each of the left wheels 6, the rib 38 may be also formed between the right ground contact section 37 and the left ground contact section 37.

### Fifth Alternative Embodiment of the Present Invention

In each of the lugs 39, the first portion 41 and the second portion 42 of the lug 39 do not need to be provided by bending the intermediate portion 40 of the lug 39. The first portion 41 and the second portion 42 of the lug 39 may be divided into separate parts, and the first portion 41 and the second portion 42 of the lug 39 may be abutted against each other.

With this configuration, the portion of the lug 39 where the first portion 41 and the second portion 42 are abutted against each other constitutes the portions of the first portion 41 and the second portion 42 of the lug 39 that are connected to each other. In this case, a small clearance may be provided between the first portion 41 and the second portion 42 of the lug 39 at the portion of the lug 39 where the first portion 41 and the second portion 42 are abutted against each other.

### Sixth Alternative Embodiment of the Present Invention

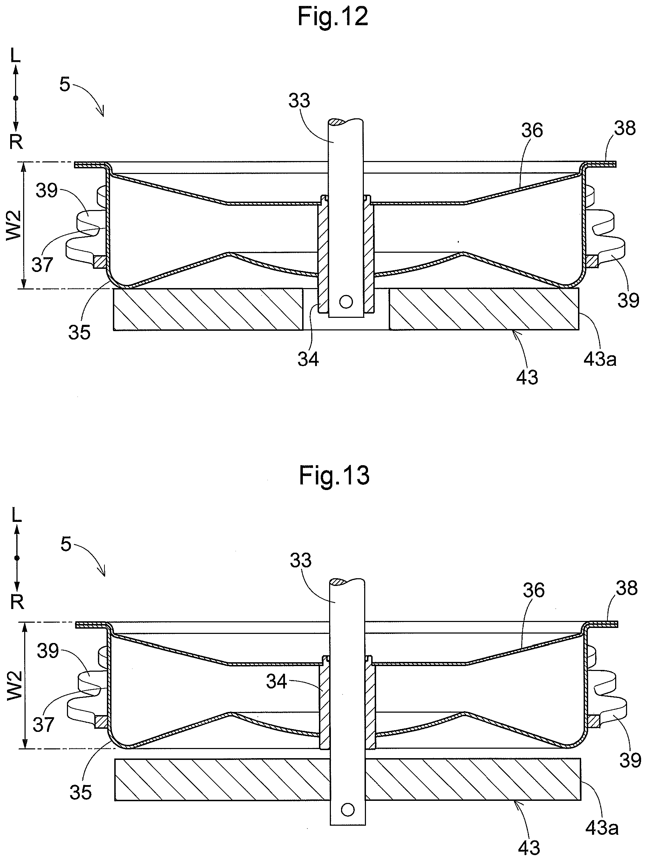

As shown in FIG. 12, in each of the right wheels 5, the disc-shaped (ring-shaped) balance weight 43 may be coupled to the outer surface (the surface on the side opposite to the cutting blade housing 1) of the first lateral side section 35, coaxially with the right wheel 5.

Similarly, the disc-shaped (ring-shaped) balance weight 43 may be coupled to the outer surface (the surface on the cutting blade housing 1 side) of the second lateral side section 36, coaxially with the right wheel 5.

In this case, the outer end 43a of the balance weight 43 may be located at the same position as the ground contact section 37, or at a position slightly protruding outward in the radial direction from the ground contact section 37, or at a position slightly toward the axles 33 and 34 in the radial direction from the ground contact section 37.

### Seventh Alternative Embodiment of the Present Invention

As shown in FIG. 13, in each of the right wheels 5, the disc-shaped (ring-shaped) balance weight 43 may be coupled to the axle 33 or the axle 34 coaxially with the right wheel 5 so as to be located outward (the side opposite to the cutting blade housing 1) of the first lateral side section 35.

Similarly, the disc-shaped (ring-shaped) balance weight 43 may be coupled to the axle 33 or the axle 34 coaxially with the right wheel 5 so as to be located outward (the cutting blade housing 1 side) of the second lateral side section 36.

In this case, the outer end 43a of the balance weight 43 may be located at the same position as the ground contact section 37, or at a position slightly protruding outward in the radial direction from the ground contact section 37, or at a position slightly toward the axles 33 and 34 in the radial direction from the ground contact section 37.

### Eighth Alternative Embodiment of the Present Invention

Each of the right wheels 5 does not need to be provided with one disc-shaped (ring-shaped) balance weight 43, and may be provided with a plurality of disc-shaped (ring-shaped) balance weights 43.

In this case, some of the balance weights 43 may be provided inside the right wheel 5 as shown in FIG. 5, and the rest of the balance weights 43 may be provided outside the right wheel 5, as described in "First Alternative Embodiment of the Present Invention" and "Second Alternative Embodiment of the Present Invention" above.

In place of one continuous disc-shaped (ring-shaped) balance weight 43, a plurality of balance weights 43 may be provided so as to be equidistantly aligned along the circumferential direction of the right wheel 5.

### Ninth Alternative Embodiment of the Present Invention

The engine 4 may be disposed (or supported) between the left wheels 6 in a plan view, and the balance weight 43 may be provided in each of the left wheels 6.

With this structure, the structure of the left wheels 6 described in "Best Mode for Carrying out the Invention", and "First Alternative Embodiment of the Present Invention" through "Fifth Alternative Embodiment of the Present Invention" above may be used for the right wheels 5, and the structure of the right wheels 5 described in "Best Mode for Carrying out the Invention" and "First Alternative Embodiment of the Present Invention" through "Eighth Alternative Embodiment of the Present Invention" above may be used for the left wheels 6.

### Tenth Alternative Embodiment of the Present Invention

The engine 4 may be disposed (or supported) between the left wheels 6 in a plan view, and a balance weight may be provided in each of the left wheels 6. With this configuration, the opening 55c may be provided in the lateral side section 55b of the right lateral section 55 in the cutting blade housing 1.

### Eleventh Alternative Embodiment of the Present Invention

In the cutting blade housing 1, the opening 55c may be provided in the lateral side sections 55b of both of the right and left lateral sections 55.

Instead of using the removable lid section 70, the lid section 70 may be configured to open and close through pivoting by attaching the lid section 70 to the lateral side section 55b of the lateral section 55 using a hinge member (not shown).

### Twelfth Alternative Embodiment of the Present Invention

In place of the engine 4, an electric motor (not shown) and a battery (not shown) may be provided as the prime mover section. With this configuration, an electric motor that drives the wheels 5 and 6 and an electric motor that drives the cutting blade 2 may be provided separately.

### Industrial Applicability

The present invention is not only applicable to a remote control type work vehicle that is wirelessly operated, but also to an autonomous travel type work vehicle that detects obstacles such as trees, using a radar sensor or the like, and travels automatically while avoiding obstacles, and a walk-behind type work vehicle with an elongated steering rod extending from the vehicle body thereof, which is variously operated by an operator holding the steering rod.

The present invention is not only applicable to a mower machine, but also to a work vehicle that is provided with a cultivator apparatus (corresponding to a work apparatus) for cultivating the ground, and a work vehicle that is provided with a sprayer apparatus (corresponding to a work apparatus) for spraying chemicals or water.

### Description of Reference Signs

1: Vehicle body
2: Work apparatus
4: Prime mover section
5, 6: Wheel
33, 34: Axle
35: First lateral side section
36: Second lateral side section
37: Ground contact section
39: Lug
40: Intermediate portion
41: First portion
41a: Portion
42: Second portion
42a: Portion
43: Balance weight
43a: Outer end
50: Cover section
54a: Upper side section
55b: Lateral side section
55c: Opening
70: Lid section
A1: Rotation direction
CL: Lateral center
W1: Gap
W2: Width
W3: Width
P5: Axis

## Claims

1. A work vehicle comprising:
right and left wheels (5, 6) on one side in a front-back direction of a vehicle body (1); right and left wheels (5, 6) on another side of the vehicle body (1) in the front-back direction thereof, a work apparatus (2); and a prime mover section (4) that transmits power to the wheels (5, 6) and the work apparatus (4),
**characterized in that** either the right wheels (5) or the left wheels (6) are provided with a balance weight (43),
a center of gravity of the vehicle body (1) is located on a balance weight side relative to a lateral center (CL) of the vehicle body (1), and
the prime mover section (4) is disposed so as to be displaced toward the balance weight (43) relative to the lateral center (CL) of the vehicle body (1).

2. The work vehicle according to claim 1,
wherein the balance weight (43) is provided toward an axle (33, 34) of each of the corresponding wheels (5, 6) relative to the ground contact section (37) of the wheel (5, 6).

3. The work vehicle according to claim 2,
wherein the wheels (5, 6) that are provided with the balance weight (43) each include:
the axle (33, 34); a first lateral side section (35) and a second lateral side section (36) that are coupled to the axle (33, 34); and the ground contact section (37) that is provided at an outer end of each of the first lateral side section (35) and the second lateral side section (36), and
the balance weight (43) is provided on the axle side relative to the ground contact section (37), and between the first lateral side section (35) and the second lateral side section (36).

4. The work vehicle according to claim 3,
wherein the balance weight (43) is coupled to the axle (33, 34), and
an outer end of the balance weight (43) is in contact with or in proximity to a surface of the ground contact section (37) that is on the axle side.

5. The work vehicle according to any of claims 1 to 4,
wherein the balance weight (43) has a disc shape, and is provided coaxially with each of the corresponding wheels (5, 6).

## Patentansprüche

1. Arbeitsfahrzeug, umfassend:
rechte und linke Räder (5, 6) auf einer Seite in einer Richtung von vorne nach hinten einer Fahrzeugkarosserie (1); rechte und linke Räder (5, 6) auf einer anderen Seite der Fahrzeugkarosserie (1) in einer Richtung von vorne nach hinten, davon; ein Arbeitsgerät (2); und einen primären Antriebsabschnitt (4), der Kraft auf die Räder (5, 6) und das Arbeitsgerät (4) überträgt,
**dadurch gekennzeichnet, dass** entweder die rechten Räder (5) oder die linken Räder (6) mit einem Gegengewicht (43) ausgestattet sind,
eine Schwerkraft der Fahrzeugkarosserie (1) sich auf einer Seite des Gegengewichts relativ zu einer lateralen Mitte (CL) der Fahrzeugkarosserie (1) befindet, und
der primäre Antriebsabschnitt (4) so angeordnet ist, dass er hin zum Gegengewicht (43) relativ zur lateralen Mitte (CL) der Fahrzeugkarosserie (1) verschoben wird.

2. Arbeitsfahrzeug nach Anspruch 1,
wobei das Gegengewicht (43) hin zu einer Achse (33, 34) jedes der entsprechenden Räder (5, 6) relativ zum Bodenkontaktabschnitt (37) des Rads (5, 6) bereitgestellt ist.

3. Arbeitsfahrzeug nach Anspruch 2,
wobei die Räder (5, 6), die mit dem Gegengewicht (43) ausgestattet sind, jeweils Folgendes beinhalten:
die Achse (33, 34); einen ersten lateralen Seitenabschnitt (35) und einen zweiten lateralen Seitenabschnitt (36), die mit der Achse (33, 34) gekoppelt sind; und den Bodenkontaktabschnitt (37), der an einem äußeren Ende jedes des ersten lateralen Seitenabschnitts (35) und des zweiten lateralen Seitanabschnitts (36) bereitgestellt ist, und
das Gegengewicht (43) auf der Seite der Achse relativ zum Bodenkontaktabschnitt (37) und zwischen dem ersten lateralen Seitenabschnitt (35) und dem zweiten lateralen Seitanabschnitt (36) bereitgestellt ist.

4. Arbeitsfahrzeug nach Anspruch 3,
wobei das Gegengewicht (43) mit der Achse (33, 34) gekoppelt ist, und
ein äußeres Ende des Gegengewichts (43) in Kontakt mit oder in der Nähe einer Fläche des Bodenkontaktabschnitts (37) ist, der sich auf der Seite der Achse befindet.

5. Arbeitsfahrzeug nach einem der Ansprüche 1 bis 4,
wobei das Gegengewicht (43) eine Scheibenform aufweist und koaxial mit jedem der entsprechenden Räder (5, 6) bereitgestellt ist.

## Revendications

1. Engin de chantier comprenant :
des roues droite et gauche (5, 6) sur un côté dans une direction avant-arrière d'un corps de véhicule (1) ; des roues droite et gauche (5, 6) sur un autre côté du corps de véhicule (1) dans sa direction avant-arrière ; un appareil de travail (2) ; et une section de moteur d'entraînement (4) qui transmet la puissance aux roues (5, 6) et à l'appareil de travail (4),
**caractérisé en ce que** les roues droites (5) ou les roues gauches (6) sont prévues avec une masse d'équilibrage (43),
un centre de gravité du corps de véhicule (1) est situé du côté de la masse d'équilibrage par rapport à un centre latéral (CL) du corps de véhicule (1), et
la section de moteur d'entraînement (4) est disposée afin d'être déplacée vers la masse d'équilibrage (43) par rapport au centre latéral (CL) du corps de véhicule (1).

2. Engin de chantier selon la revendication 1,
dans lequel la masse d'équilibrage (43) est prévue vers un essieu (33, 34) de chacune des roues (5, 6) correspondantes par rapport à la section de contact avec le sol (37) de la roue (5, 6).

3. Engin de chantier selon la revendication 2,
dans lequel les roues (5, 6) qui sont prévues avec la masse d'équilibrage (43) comprennent chacune :
l'essieu (33, 34) ; une première section latérale (35) et une deuxième section latérale (36) qui sont couplées à l'essieu (33, 34) ; et la section de contact avec le sol (37) qui est prévue au niveau d'une extrémité externe de chacune parmi la première section latérale (35) et la deuxième section latérale (36), et
la masse d'équilibrage (43) est prévue sur le côté de l'essieu par rapport à la section de contact avec le sol (37) et entre la première section latérale (35) et la deuxième section latérale (36).

4. Engin de chantier selon la revendication 3,
dans lequel la masse d'équilibrage (43) est couplée à l'essieu (33, 34), et
une extrémité externe de la masse d'équilibrage (43) est en contact avec ou à proximité d'une surface de la section de contact avec le sol (37) qui est du côté de l'essieu.

5. Engin de chantier selon l'une quelconque des revendications 1 à 4,
dans lequel la masse d'équilibrage (43) a une forme de disque et est prévue de manière coaxiale avec chacune des roues (5, 6) correspondantes.
